# EUROPÄISCHE PATENTANMELDUNG

(11) **EP 4 523 578 A1**
(43) Veröffentlichungstag der Anmeldung: **19.03.2025**
(21) Anmeldenummer: 24200140.2
(22) Anmeldetag: 13.09.2024
(51) Int. Cl.: A47J 31/46, A47J 31/52

(54) **VERFAHREN ZUM BETREIBEN EINES GETRÄNKEBEREITERS SOWIE GETRÄNKEBEREITER**

(30) Priorität: 15.09.2023 DE 102023125024
(71) Anmelder: Wilhelm Gronbach GmbH & Co. KG, 6342 Niederndorf (AT)
(72) Erfinder: Höck, Florian, 83313 Siegsdorf (DE); Mathes, Dr. Anton, 83364 Neukirchen (DE)
(74) Vertreter: Hofstetter, Schurack & Partner

(57) **Zusammenfassung**

Die Erfindung betrifft ein Verfahren zum Betreiben eines Getränkebereiters (10), bei welchem zumindest während eines Teils einer Zubereitung eines Getränks eine Schwingkolbenpumpe (18) des Getränkebereiters (10) mittels einer Phasenanschnittsteuerung angesteuert wird, wodurch die Schwingkolbenpumpe (18) Wasser zum Zubereiten des Getränks fördert. Mittels eines Drucksensors (24) des Getränkebereiters (10) wird ein Druck des mittels der Schwingkolbenpumpe (18) geförderten Wasser erfasst. Die Phasenanschnittsteuerung zum Ansteuern der Schwingkolbenpumpe (18) wird in Abhängigkeit von dem mittels des Drucksensors (24) erfassten Druck durchgeführt.

## Beschreibung

Die vorliegende Erfindung betrifft ein Verfahren zum Betreiben eines Getränkebereiters sowie ein Getränkebereiter.

Getränkebereiter wie beispielsweise Heißgetränkebereiter, insbesondere Kaffeemaschinen, sind aus dem allgemeinen Stand der Technik bereits hinlänglich bekannt. Mittels des jeweiligen Getränkebereiters können Getränke, insbesondere Heißgetränke, zubereitet werden. Um das jeweilige Getränk zuzubereiten, wird üblicherweise Wasser verwendet, aus welchem das jeweilige Getränk zubereitet wird.

Aufgabe der vorliegenden Erfindung ist es, ein Verfahren zum Betreiben eines Getränkebereiters sowie einen Getränkebereiter zu schaffen, sodass mittels des Getränkebereiters Getränke besonders vorteilhaft zubereitet werden können.

Diese Aufgabe wird erfindungsgemäß durch ein Verfahren mit den Merkmalen des Patentanspruchs 1 sowie durch einen Getränkebereiter mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines Getränkebereiters. Der Getränkebereiter ist eine Vorrichtung, mittels welcher Getränke zubereitet werden können. Bei dem Verfahren wird zumindest während eines Teils einer Zubereitung eines Getränks eine einfach auch als Pumpe bezeichnete Schwingkolbenpumpe des Getränkebereiters mittels einer Phasenanschnittsteuerung angesteuert, wodurch die Schwingkolbenpumpe betrieben wird und hierdurch Wasser zum Zubereiten des Getränks fördert. Dies bedeutet, dass das Getränk bei der Zubereitung aus dem Wasser, das bei der Zubereitung mittels der Schwingkolbenpumpe gefördert wird, zubereitet wird. Die Phasenanschnittsteuerung wird beispielsweise mittels einer elektronischen Recheneinrichtung des Getränkebereiters durchgeführt, sodass mittels der elektronischen Recheneinrichtung unter Durchführung der Phasenanschnittsteuerung die Schwingkolbenpumpe angesteuert wird, um hierdurch die Schwingkolbenpumpe zu betreiben und somit das Wasser zum Zubereiten des Getränks fördern zu lassen.

Bei dem Verfahren ist es auch vorgesehen, dass zumindest während des Teils der Zubereitung mittels eines Drucksensors des Getränkebereiters ein Druck des mittels der Schwingkolbenpumpe geförderten Wassers erfasst, das heißt gemessen wird. Da der Druck, der mittels des Drucksensors erfasst wird, ein Druck des mittels der Schwingkolbenpumpe geförderten Wassers ist, ist oder wird der Druck durch die Schwingkolbenpumpe bewirkt, dadurch, dass die Schwingkolbenpumpe das Wasser fördert.

Bei dem Verfahren ist es vorgesehen, dass zumindest während des Teils der Zubereitung des Getränks die Phasenanschnittsteuerung zum Ansteuern der Schwingkolbenpumpe in Abhängigkeit von dem mittels des Drucksensors erfassten Druck durchgeführt wird. Dies bedeutet, dass die Phasenanschnittsteuerung von dem mittels des Drucksensors erfassten Druck abhängt.

Wie aus dem allgemeinen Stand der Technik bekannt ist, verwendet die Phasenanschnittsteuerung beispielsweise einen insbesondere als elektrischen Wechselstrom ausgebildeten, elektrischen Strom mit insbesondere aufeinanderfolgenden, insbesondere als Sinushalbwellen ausgebildeten Halbwellen, wobei die jeweilige Halbwelle, insbesondere genau, zwei jeweilige Nulldurchgänge aufweist, nämlich einen jeweiligen ersten Nulldurchgang und einen jeweiligen, insbesondere zeitlich auf den jeweiligen, ersten Nulldurchgang folgenden, zweiten Nulldurchgang. Die Schwingkolbenpumpe wird dabei bezogen auf die jeweilige Halbwelle, insbesondere erst, ab einem jeweiligen, zu der jeweiligen Halbwelle gehörenden Phasenanschnittwinkel mit dem elektrischen Strom versorgt, wobei sich diese Versorgung der Schwingkolbenpumpe mit dem elektrischen Strom bezogen auf die jeweilige Halbwelle von dem jeweiligen, zur jeweiligen Halbwelle gehörenden Phasenanschnittwinkel, insbesondere durchgängig, bis zu dem jeweiligen, zeitlich auf den jeweiligen, zur jeweiligen Halbwelle gehörenden Phasenanschnittwinkel folgenden, zweiten Nulldurchgang der jeweiligen Halbwelle erfolgt. Dabei wird beispielsweise die Phasenanschnittsteuerung, mittels welcher die Schwingkolbenpumpe angesteuert wird, in Abhängigkeit von dem mittels des Drucksensors erfassten Druck derart durchgeführt, dass die Phasenanschnittwinkel in Abhängigkeit von dem mittels des Drucksensors erfassten Druck eingestellt, das heißt beispielsweise gewählt oder ausgewählt, werden, wobei beispielsweise die Phasenanschnittwinkel der Phasenanschnittsteuerung in Abhängigkeit von dem mittels des Drucksensors Druck variiert werden.

Um das Getränk besonders vorteilhaft zubereiten zu können, ist es in weiterer Ausgestaltung der Erfindung vorgesehen, dass durch das von dem erfassten Druck abhängige Durchführen der Phasenanschnittsteuerung eine Regelung, insbesondere mittels der elektronischen Recheneinrichtung, durchgeführt wird, wobei mittels der Regelung der Druck geregelt wird. Dies bedeutet, dass den Druck eine Regelungsgröße der Regelung ist, welche die Regelungsgröße einstellt, das heißt regelt. Beispielsweise umfasst die Regelung, dass die Regelung, das heißt ein Regler der Regelung die Phasenanschnittwinkel in Abhängigkeit von dem mittels des Drucksensors erfassten Druck bereitstellt, das heißt beispielsweise vorgibt. Ferner ist es denkbar, dass die Regelung, das heißt der Regler in Abhängigkeit von dem mittels des Drucksensors erfassten Druck Regel-Phasenanschnittwinkel vorgibt, wobei beispielsweise zu oder für den jeweiligen Regel-Phasenanschnittwinkel, insbesondere genau, ein jeweiliger, zugehöriger Ist-Phasenanschnittwinkel erzeugt wird, und wobei beispielsweise die Ist-Phasenanschnittwinkel als die Phasenanschnittwinkel verwendet werden. Insbesondere kann vorgesehen sein, dass sich wenigstens einer der Ist-Phasenanschnittwinkel von dem zugehörigen Regel-Phasenanschnittwinkel, zu oder für den der wenigstens eine, zugehörige Ist-Phasenanschnittwinkel erzeugt, das heißt insbesondere berechnet, wurde, unterscheidet. Das Verfahren ermöglicht es, den Druck besonders präzise einzustellen, insbesondere zu regeln, wodurch das Getränk besonders zubereitet werden kann.

Der zuvor genannte Teil der Zubereitung wird auch als erster Teil der Zubereitung bezeichnet.

Eine weitere Ausführungsform zeichnet sich dadurch aus, dass während zumindest eines dem ersten Teil der Zubereitung zeitlich vorweggehenden oder sich zeitlich an den ersten Teil der Zubereitung anschließenden, zweiten Teils der Zubereitung des Getränks die Schwingkolbenpumpe mittels einer zweiten Phasenanschnittsteuerung angesteuert wird, wodurch die Schwingkolbenpumpe das Wasser zum Zubereiten des Getränks während des zweiten Teils fördert. Dabei ist es vorgesehen, dass während des zweiten Teils der Zubereitung des Getränks mittels eines Durchflusssensors des Getränkebereiters eine Messgröße erfasst wird, welche einen beispielsweise als Volumenstrom oder Massenstrom ausgebildeten Durchfluss während des zweiten Teils mittels der Schwingkolbenpumpe geförderten Wassers charakterisiert. Des Weiteren ist es vorgesehen, dass während des zweiten Teils der Zubereitung des Getränks die zweite Phasenanschnittsteuerung zum Ansteuern der Schwingkolbenpumpe in Abhängigkeit von dem mittels des Durchflusssensors erfassten Durchfluss durchgeführt wird. Dies bedeutet, dass die zweite Phasenanschnittsteuerung von dem erfassten, das heißt gemessenen Durchfluss abhängt, beispielsweise derart, dass zweite Phasenanschnittwinkel der zweiten Phasenanschnittsteuerung in Abhängigkeit von dem gemessenen Durchfluss eingestellt, das heißt ausgewählt oder gewählt, insbesondere variiert, werden. Hierdurch kann das Getränk besonders zubereitet werden.

Um eine besonders vorteilhafte Zubereitung des Getränks zu realisieren, ist es in weiterer Ausgestaltung der Erfindung vorgesehen, dass während des zweiten Teils der Zubereitung des Getränks durch das von dem erfassten Durchfluss abhängige Durchführen der zweiten Phasenanschnittsteuerung eine zweite Regelung durchgeführt wird, mittels welcher der Durchfluss geregelt wird. Die zweite Regelung verwendet somit den Durchfluss als zweite Regelgröße. Die vorigen und folgenden Ausführungen zur ersten Regelung und zur ersten Phasenanschnittsteuerung können ohne Weiteres auch auf die zweite Regelung und die zweite Phasenanschnittsteuerung übertragen werden, sodass beispielsweise die Phasenanschnittsteuerung die zweiten Phasenanschnittwinkel oder zweite Regel-Phasenanschnittwinkel bereitstellt, aus welchen die zweiten Phasenanschnittwinkel resultieren können. Hierdurch kann das Getränk besonders vorteilhaft zubereitet werden.

Um das Getränk besonders vorteilhaft zubereiten zu können, ist es in weiterer Ausgestaltung der Erfindung vorgesehen, dass als der Getränkebereiter ein Heißgetränkebereiter betrieben wird.

Dabei hat es sich als besonders vorteilhaft gezeigt, wenn als der Heißgetränkebereiter eine Kaffeemaschine betrieben wird.

Eine weitere Ausführungsform zeichnet sich dadurch aus, dass als Kaffeemaschine eine Siebträgermaschine betrieben wird.

Ein zweiter Aspekt der Erfindung betrifft einen Getränkebereiter, welcher zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Der Betrieb des Getränkebereiters als Siebträgermaschine ist insofern besonders vorteilhaft, als herkömmliche Siebträgermaschinen den Druck rein mechanisch einstellen können. Mit anderen Worten kann bei herkömmlichen Siebträgermaschinen der Druck nur rein mechanisch eingestellt werden, insbesondere über ein Brühventil, welches überschüssiges, als Druckwasser ausgebildetes Wasser zurück in einem Tank lässt. Hierdurch wird jedoch bei der Zubereitung des Getränks mehr Energie als erforderlich benötigt, und ein Rückweg in ein Fluidsystem, wie beispielsweise den Tank, kann hygienisch bedenklich sein und nur mit Hilfe von komplexen Spülprozessen entkalkt werden, was eine Automatisierung eines Entkalkungsprozesses zur Entkalkung erschwert.

Der Getränkebereiter weist beispielsweise eine Bedieneinrichtung auf, mittels welcher durch eine Person bewirkte Bedienung der Bedieneinrichtung und somit des Getränkebereiters erfasst werden können. Beispielsweise ist es bei dem Verfahren vorgesehen, dass wenigstens eine durch eine Person bewirkte und einen Soll-Druck charakterisierende Bedienung erfasst wird. Dabei ist es z.B. Beispiel vorgesehen, dass die Phasenanschnittsteuerung in Abhängigkeit von dem Soll-Druck, das heißt in Abhängigkeit von der erfassten Bedienung durchgeführt wird, insbesondere beispielsweise derart, dass mittels der Phasenanschnittsteuerung und somit mittels der Schwingkolbenpumpe der Druck in Abhängigkeit von dem Soll-Druck, das heißt in Abhängigkeit von der Bedienung eingestellt wird. Diesbezüglich ist beispielsweise denkbar, dass die zuvor genannte erste Regelung den Soll-Druck als auch als Soll-Größe bezeichnete Führungsgröße verwendet, sodass vorzugsweise der Druck durch die erste Regelung in Abhängigkeit von dem Soll-Druck geregelt wird.

Beispielsweise weist der Getränkebereiter eine insbesondere elektrische oder elektronische Anzeige auf, welche auch als Bildschirm bezeichnet wird. Beispielsweise wird auf dem Bildschirm der auch als Zieldruck bezeichnete Soll-Druck, das heißt beispielsweise ein den Soll-Druck charakterisierender Wert oder ein Wert des Soll-Drucks angezeigt. Insbesondere ermöglicht es die Erfindung, unterschiedliche und zumindest nahezu beliebige Druckkurven oder Druckstufen des Drucks einzustellen, das heißt anzufahren oder abzufahren, was bislang nur durch Verwendung von gegenüber Schwingkolbenpumpen wesentlich kostenintensiveren Zahnradpumpen oder elektronisch gesteuerten Druckregelventilen möglich war. Des Weiteren ermöglicht die Erfindung im Vergleich zu herkömmlichen Lösungen eine besonders einfache Entkalkung, da im Vergleich zu einer rein mechanischen Einstellung des Drucks ein besonders einfaches, von dem Wasser durchströmbares Fluidsystem des Getränkebereiters realisiert werden kann, dessen Fluidsystem einfach und kostengünstig entkalkt werden kann. Des Weiteren kann ein aus hygienischer Sicht aufwendiger oder gar kritischer Rücklaufpfad bei dem Getränkebereiter vermieden werden. Außerdem ist es möglich, die besonders kostengünstige Schwingkolbenpumpe zu verwenden, sodass die Kosten des Getränkebereiters in einem besonders geringen Rahmen gehalten werden können.

Die Phasenanschnittsteuerung ermöglicht es, mittels der Schwingkolbenpumpe, die eigentlich nur dafür gedacht und ausgelegt ist, mit einer konstanten elektrischen Versorgungsspannung von beispielsweise 230 Volt betrieben zu werden, den Druck zu variieren, das heißt unterschiedliche Werte des Drucks einzustellen, insbesondere derart, dass der Druck geregelt wird. Die Phasenanschnittsteuerung ermöglicht es insbesondere, auch Leistungszustände der Schwingkolbenpumpe mit weniger als 100% ihrer Volllast anfahren zu können. Hierdurch kann der Druck besonders präzise eingestellt und insbesondere variiert werden und somit auf unterschiedliche Werte gebracht werden. Beispielsweise wird die Schwingkolbenpumpe mit Hilfe einer Diode angesteuert, die beispielsweise abwechselnd eine der Halbwellen zu der Schwingkolbenpumpe durchlässt und dann insbesondere eine unmittelbar darauffolgende Halbwelle sperrt, das heißt nicht zur Schwingkolbenpumpe durchlässt, sodass beispielsweise eine Spule der Schwingkolbenpumpe durch die jeweils durchgelassene Halbwelle mit dem elektrischen Strom versorgt und dadurch aufgeladen wird, insbesondere von dem jeweiligen, zu der jeweiligen, durchgelassenen Halbwelle gehörenden Phasenanschnittwinkel bis zu dem jeweiligen, zweiten Nulldurchgang der jeweiligen, durchgelassenen Halbwelle. Bei der jeweiligen, auf die jeweilige, durchgelassene Halbwelle folgende, gesperrten Halbwelle kann sich die Feder (wieder) entspannen, wodurch die Feder einen einfach auch als Stößel oder Kolben bezeichneten Pumpstößel antreibt, mittels welchem dadurch das Wasser gefördert wird.

Erfindungsgemäß wird zum Durchführen der Phasenanschnittsteuerung, insbesondere zur Durchführung der ersten Regelung, der Drucksensor verwendet.

Der genannte Regler ist beispielsweise ein PID-Regler. Der Regler regelt den Druck beispielsweise so, dass der Druck dem Soll-Druck entspricht oder dass eine Abweichung des Drucks von dem Soll-Druck möglichst gering und/oder geringer als ein beispielsweise vorgebbarer oder vorgegebener Schwellenwert ist.

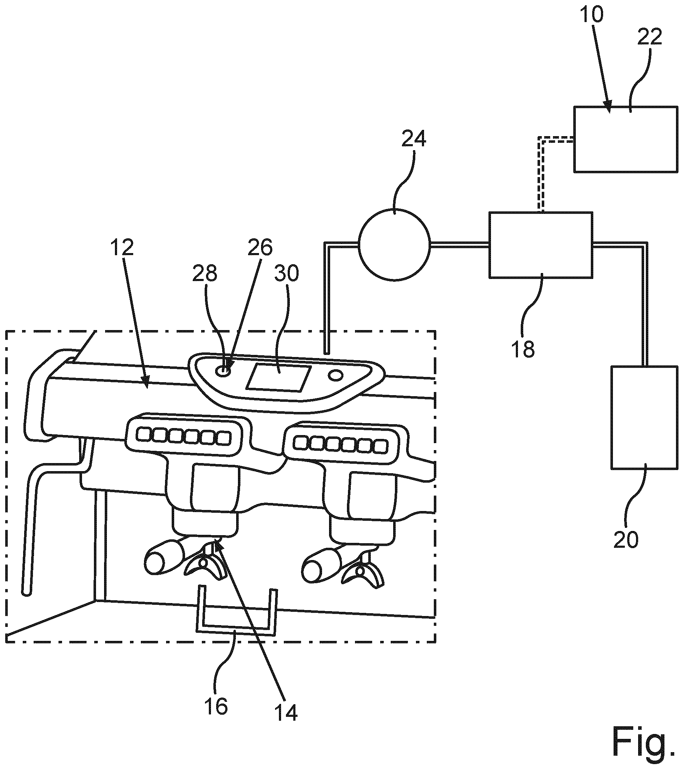

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung vorwendbar, ohne den Rahmen der Erfindung zu verlassen.

Die Zeichnung zeigt in der einzigen Fig. eine schematische Darstellung eines Getränkebereiters zum Zubereiten von Getränken.

Die einzige Fig. zeigt in einer schematischen Darstellung einen Getränkebereiter 10 zum Zubereiten von Getränken. Bei dem in der Fig. gezeigten Ausführungsbeispiel ist der Getränkebereiter 10 als ein Heißgetränkebereiter ausgebildet, wobei der Heißgetränkebereiter eine als Siebträgermaschine ausgebildete Kaffeemaschine ist. Bei dem in der Fig. gezeigten Ausführungsbeispiel weist der Getränkebereiter 10 einen einfach auch als Kopf bezeichneten Brühkopf 12 auf, an welchem ein separat von dem Getränkebereiter 10 ausgebildeter Siebträger 14 zerstörungsfrei lösbar befestigbar ist. In der Fig. ist der Siebträger 14 zerstörungsfrei lösbar an dem Brühkopf 12 befestigt. In dem Siebträger 14 ist ein einfach auch als Kaffeepulver bezeichnetes Pulver aufnehmbar oder aufgenommen. Strömt in einem Zustand, in welchem der Siebträger 14 zerstörungsfrei lösbar an dem Brühkopf 12 befestigt und Kaffeepulver in dem Siebträger 14 aufgenommen ist, Wasser durch den Siebträger 14 und dabei durch das Kaffeepulver hindurch und in der Folge aus dem Siebträger 14 aus, derart, dass das aus dem Siebträger 14 ausströmende Wasser in ein in vertikaler Richtung unterhalb des Siebträgers 14 angeordnetes, beispielsweise als Tasse ausgebildetes Behältnis 16 einströmt, so sammelt sich das aus dem Siebträger 14 ausströmende Wasser in dem Behältnis 16, wobei aus dem Kaffeepulver und aus dem Wasser das zuvor genannte Getränk als ein Kaffeegetränk zubereitet wird, das sich in dem Behältnis 16 sammelt.

Der Getränkebereiter 10 weist eine einfach auch als Pumpe bezeichnete Schwingkolbenpumpe 18 auf, mittels welcher das Wasser, insbesondere aus einem Behältnis 20, zu dem und durch den Brühkopf 12 hindurchgefördert werden kann. Beispielsweise ist das Behältnis 20, in welchem das Wasser aufnehmbar oder aufgenommen ist, ein Bestandteil des Getränkebereiters 10. Das mittels der Schwingkolbenpumpe 18 geförderte den Brühkopf 12 durchströmende Wasser kann von dem Brühkopf 12 zu dem, in den und durch den Siebträger 14 und dabei durch das in dem Siebträger 14 aufgenommene Kaffeepulver strömen. Durch das mittels der Schwingkolbenpumpe 18 bewirkte Fördern des Wassers wird mittels der Schwingkolbenpumpe 18 bewirkte Fördern des Wassers wird mittels der Schwingkolbenpumpe 18 ein auch als Wasserdruck bezeichneter Druck des Wassers bewirkt, sodass das Wasser mit dem Wasserdruck durch den Siebträger 14 und dabei insbesondere durch das Kaffeepulver hindurchströmt. Mit anderen Worten wird bei einer Zubereitung des Getränks mittels der Schwingkolbenpumpe 18 das den Wasserdruck aufweisende Wasser durch den Brühkopf 12 und den Siebträger 14 hindurchgefördert.

Im Folgenden wird anhand der Fig. ein Verfahren zum Betreiben des Getränkebereiters 10 erläutert. Beispielsweise wird die zuvor genannte zum Zubereitung des Getränks bei dem Verfahren durchgeführt. Somit wird beispielsweise bei dem Verfahren mittels der Schwingkolbenpumpe das Wasser insbesondere aus dem Behältnis 20 zu dem Brühkopf 12 hingefördert und durch den Brühkopf 12 hindurchgefördert, wobei insbesondere bei dem Verfahren mittels der Schwingkolbenpumpe 18 das Wasser aus dem Behältnis 20 über den Brühkopf 12 zu dem Siebträger 14 gefördert und durch den Siebträger 14 hindurchgefördert wird, wodurch das mittels der Schwingkolbenpumpe 18 geförderte Wasser insbesondere durch das Kaffeepulver hindurchströmt, insbesondere derart, dass das Wasser mit dem Wasserdruck den Siebträger 14 und insbesondere das Kaffeepulver durchströmt.

Der Getränkebereiter 10 weist eine elektronische Recheneinrichtung 22 auf, mittels welcher das Verfahren durchgeführt wird. Bei dem Verfahren wird zumindest während eines Teils der Zubereitung des Getränks die Schwingkolbenpumpe 18 mittels einer Phasenanschnittsteuerung angesteuert, welcher mittels der elektronischen Recheneinrichtung 22 durchgeführt wird, sodass zumindest während des Teils der Zubereitung des Getränks bei dem Verfahren die Schwingkolbenpumpe 18 mittels der elektronischen Recheneinrichtung 22 unter Nutzung der Phasenanschnittsteuerung angesteuert wird. Durch dieses Ansteuern der Schwingkolbenpumpe 18 mittels der Phasenanschnittsteuerung wird die Schwingkolbenpumpe 18 derart betrieben, dass die Schwingkolbenpumpe 18 das Wasser zum Zubereiten des Getränks fördert. Insbesondere wird durch dieses Ansteuern der Schwingkolbenpumpe 18 die Schwingkolbenpumpe 18 derart betrieben, dass die Schwingkolbenpumpe 18 das Wasser wie beschrieben fördert und dabei den Wasserdruck bewirkt, mit welchem das Wasser durch den Brühkopf 12 und/oder den Siebträger 14 hindurchströmt.

Der Getränkebereiter 10 weist einen Drucksensor 24 auf, mittels welchem zumindest während des Teils der Zubereitung des Getränks und insbesondere während die Schwingkolbenpumpe 18 das Wasser zum Zubereiten des Getränks fördert, der Wasserdruck des mittels der Schwingkolbenpumpe 18 geförderten Wassers erfasst, das heißt gemessen wird. Außerdem ist es vorgesehen, dass bei dem Verfahren zumindest während des Teils der Zubereitung des Getränks die Phasenanschnittsteuerung zum Ansteuern der Schwingkolbenpumpe 18 mittels der elektronischen Recheneinrichtung 22 in Abhängigkeit von dem mittels des Drucksensors 24 erfassten Druck durchgeführt wird. Da durch das Ansteuern der Schwingkolbenpumpe mittels der Schwingkolbenpumpe der Wasserdruck bewirkt wird, und da die Schwingkolbenpumpe 18 mittels der Phasenanschnittsteuerung angesteuert wird, wird mittels der Phasenanschnittsteuerung der Druck bewirkt, das heißt insbesondere eingestellt.

Beispielsweise weist der Getränkebereiter 10 eine Bedieneinrichtung 26 auf, welche wenigstens ein Bedienelement 28 und einen Bildschirm 30 aufweist. Eine Person kann das Bedienelement 28 bedienen und dadurch Eingaben in den Getränkebereiter 10 vornehmen, wobei mittels der Bedieneinrichtung 26, insbesondere mittels des Bedienelements 28, die jeweilige, mittels von der Person bewirkte und auch als Bedienung des Getränkebereiters 10 bezeichnete Eingabe in den Getränkebereiter 10 erfassbar ist oder insbesondere bei dem Verfahren erfasst wird. Insbesondere kann die Person durch die jeweilige Eingabe, das heißt durch Bedienen der Bedieneinrichtung 26, insbesondere des Bedienelements 28, ein Soll-Druck für das mittels der Schwingkolbenpumpe 18 zu fördernde Wasser einstellen. Hierunter ist insbesondere zu verstehen, dass die Person durch Bedienen der Bedieneinrichtung 26, insbesondere des Bedienelements 28, unterschiedliche, auch als Soll-Werte bezeichnete Werte des Soll-Drucks für das mittels der Schwingkolbenpumpe 18 bei der Zubereitung des Getränks zu fördernde Wasser einstellen kann. Somit ist oder wird durch das Erfassen der jeweiligen Eingabe beziehungsweise Bedienung der Soll-Druck, mithin der jeweilige Soll-Wert erfassbar oder erfasst, wobei es insbesondere vorgesehen ist, dass die Phasenanschnittsteuerung in Abhängigkeit von dem erfassten Soll-Wert, das heißt in Abhängigkeit von der mittels der Bedieneinrichtung 26 erfassten Bedienung durchgeführt wird.

Ganz vorzugsweise wird zumindest während des Teils der Zubereitung mittels der elektronischen Recheneinrichtung 22 eine Regelung durchgeführt, durch welche der Getränkebereiter 10 geregelt betrieben wird. Mittels der Regelung wird der Wasserdruck geregelt, wobei die Regelung durch das von dem erfassten Druck abhängige Durchführen der Phasenanschnittsteuerung durchgeführt wird. Hierunter ist insbesondere Folgendes zu verstehen: In Abhängigkeit von der mittels der Bedieneinrichtung 26 erfassten Eingabe oder Bedienung, das heißt in Abhängigkeit von dem durch die Eingabe eingestellten und erfassten Soll-Wert des Soll-Drucks und in Abhängigkeit von dem mittels des Drucksensors 24 erfassten Druck stellt ein beispielsweise als PID-Regler ausgebildeter Regler der Regelung Phasenanschnittwinkel für die Phasenanschnittsteuerung bereit, um hierdurch den Wasserdruck in Abhängigkeit von dem erfassten beziehungsweise eingestellten Soll-Wert und in Abhängigkeit von dem mittels des Drucksensors 24 erfassten Druck zu regeln. Die Regelung verwendet somit den eingestellten beziehungsweise erfassten Soll-Wert als Führungsgröße und den mittels des Drucksensors 24 erfassten, das heißt gemessenen Wasserdruck als Regelgröße, die mittels der Regelung insbesondere derart geregelt wird, dass der Wasserdruck, das heißt ein auch als IstWert bezeichneter Wert des Wasserdrucks im eingestellten beziehungsweise erfassten Soll-Wert entspricht oder dass eine Abweichung des Ist-Werts von dem eingestellten beziehungsweise erfassten Soll-Wert geringer als ein beispielsweise vorgegebener oder vorgebbarer Schwellenwert und/oder so gering wie möglich ist. Hierdurch kann auf besonders einfache Weise und insbesondere nach einem Starten der Zubereitung des Getränks automatisch der Wasserdruck besonders präzise eingestellt, insbesondere geregelt eingestellt, werden, insbesondere auf den Soll-Druck, sodass das Getränk besonders vorteilhaft zubereitet werden kann. Ferner ermöglicht es das Verfahren, insbesondere die Regelung, unterschiedliche Druckkurven abzufahren und/oder anzufahren, sodass beispielsweise Getränke auf unterschiedliche Weise insbesondere automatisch und somit besonders komfortabel zubereitet werden können.

## Patentansprüche

1. Verfahren zum Betreiben eines Getränkebereiters (10), bei welchem zumindest während eines Teils einer Zubereitung eines Getränks:
- eine Schwingkolbenpumpe (18) des Getränkebereiters (10) mittels einer Phasenanschnittsteuerung angesteuert wird, wodurch die Schwingkolbenpumpe (18) Wasser zum Zubereiten des Getränks fördert;
- mittels eines Drucksensors (24) des Getränkebereiters (10) ein Druck des mittels der Schwingkolbenpumpe (18) geförderten Wasser erfasst wird; und
- die Phasenanschnittsteuerung zum Ansteuern der Schwingkolbenpumpe (18) in Abhängigkeit von dem mittels des Drucksensors (24) erfassten Druck durchgeführt wird.

2. Verfahren nach Anspruch 1,
**dadurch gekennzeichnet, dass**
durch das von dem erfassten Druck abhängige Durchführen der Phasenanschnittsteuerung eine Regelung durchgeführt wird, mittels welcher der Druck geregelt wird.

3. Verfahren nach Anspruch 1 oder 2,
**dadurch gekennzeichnet, dass**
während zumindest eines dem Teil der Zubereitung zeitlich vorweggehenden oder sich zeitlich an den Teil der Zubereitung anschließenden, zweiten Teils der Zubereitung des Getränks:
- die Schwingkolbenpumpe (18) des Getränkebereiters (10) mittels einer zweiten Phasenanschnittsteuerung angesteuert wird, wodurch die Schwingkolbenpumpe (18) das Wasser zum Zubereiten des Getränks fördert;
- mittels eines Durchflusssensors des Getränkebereiters (10) eine Messgröße erfasst wird, welche einen Durchfluss des während des zweiten Teils mittels der Schwingkolbenpumpe (18) geförderten Wassers charakterisiert; und
- die zweite Phasenanschnittsteuerung zum Ansteuern der Schwingkolbenpumpe (18) in Abhängigkeit von dem mittels des Durchflusssensors erfassten Durchflusses durchgeführt wird

4. Verfahren nach Anspruch 3,
**dadurch gekennzeichnet, dass**
während des zweiten Teils durch das von dem erfassten Durchfluss abhängige Durchführen der zweiten Phasenanschnittsteuerung eine zweite Regelung durchgeführt wird, mittels welcher der Durchfluss geregelt wird.

5. Verfahren nach einem der vorhergehenden Ansprüche,
**dadurch gekennzeichnet, dass**
als der Getränkebereiter (10) ein Heißgetränkebereiter betrieben wird.

6. Verfahren nach Anspruch 5,
**dadurch gekennzeichnet, dass**
als der Heißgetränkebereiter eine Kaffeemaschine betrieben wird.

7. Verfahren nach Anspruch 6,
**dadurch gekennzeichnet, dass**
als die Kaffeemaschine eine Siebträgermaschine betrieben wird.

8. Getränkebereiter (10), welcher zum Durchführen eines Verfahrens nach einem der vorhergehenden Ansprüche ausgebildet ist.
